# EUROPÄISCHE PATENTANMELDUNG

(11) **EP 4 116 842 A1**
(43) Veröffentlichungstag der Anmeldung: **11.01.2023**
(21) Anmeldenummer: 21183642.4
(22) Anmeldetag: 05.07.2021
(51) Int. Cl.: G06F 16/901, G06F 16/36

(54) **COMPUTERIMPLEMENTIERTES VERFAHREN, COMPUTERPROGRAMM UND VORRICHTUNG ZUR ERWEITERUNG EINES GRAPHEN**

(71) Anmelder: Robert Bosch GmbH, 70442 Stuttgart (DE)
(72) Erfinder: Dibowski, Henrik, 75378 Bad Liebenzell (DE)

(57) **Zusammenfassung**

Vorrichtung, Computerprogramm, Computerimplementiertes Verfahren zur Erweiterung eines Graphen, insbesondere eines Wissensgraphen (200), wobei das Verfahren umfasst: Vorgeben (202) einer Eingangsgröße, die eine zu erweiternde Instanz und eine der zu erweiternden Instanz zugeordnete Relation und/oder ein der zu erweiternden Instanz zugehöriges Attribut des Graphen (200) umfasst, Bestimmen (204) einer der Eingangsgröße zugeordneten ersten Eigenschaftsbehauptungsbeschränkung, Bestimmen (208, 212) eines Abfrage-Fragments für die erste Eigenschaftsbehauptungsbeschränkung, Bestimmen (216) einer Abfrage, die eine vorgegebene Kern-Abfrage und das Abfrage-Fragment umfasst, Ausführen (218) der Query auf dem Graphen (200), wobei ein erstes Ergebnis bestimmt wird, das entweder wenigstens eine zulässige Instanz und/oder wenigstens ein zulässiges Literal für die Erweiterung der Graphdatenbank (200) umfasst oder keine Instanz und kein Literal.

## Beschreibung

### Stand der Technik

Die Erfindung betrifft ein computerimplementiertes Verfahren, ein Computerprogramm und eine Vorrichtung zur insbesondere informierten, fundierten und/oder fehlervermeidenden, semantisch möglichst korrekten Erweiterung eines Graphen, insbesondere eines Wissensgraphen.

Das Detektieren von Fehlern in bereits invaliden Graphen kann beispielweise mittels dafür geeigneter Sprachen erfolgen. Für Wissensgraphen kann dies beispielsweise mittels Web Ontology Language, OWL, basiertem Reasoning oder Shapes Constraint Language, SHACL, oder Shape expressions, ShEx erfolgen.

Die unter https://www.w3.org/TR/owl2-overview/ abrufbare W3C Recommendation vom 11 Dezember 2012 offenbart Aspekte der OWL.

Die unter https://www.w3.org/TR/shacl/ abrufbare W3C Recommendation vom 20 Juli 2017 offenbart Aspekte der SHACL.
https://shex.io/ offenbart Aspekte von ShEx.

In Graphen, insbesondere Wissensgraphen, können Fehler durch Graph Exploration detektiert werden. Bei der Graph Exploration werden alternative Pfade gesucht, die eine Relation zwischen zwei Entitäten be- oder entkräften können. Aufgrund ihrer statistischen bzw. probabilistischen Natur und/oder Verwendung von Heuristiken können dabei auch falsche Fakten übersehen oder Fakten als falsch detektiert werden, die korrekt sind.

Fehler in Graphen können durch Ansätze detektiert werden, die auf externe Informationen wie Wikipedia, Wikidata, Webseiten, Texte etc. zugreifen, um z.B. durch Natural Language Processing Anhaltspunkte für die Korrektheit oder Inkorrektheit von modelliertem Wissen zu erlangen.

Die folgenden Veröffentlichungen stellen derartige Vorgehensweisen dar
- H. Paulheim: "Knowledge Graph Refinement: A Survey of Approaches and Evaluation Methods", Semantic Web 0 (2015) 1-0, http://semantic-webjournal.net/system/files/swj1167. pdf
- E. Huaman, E. Kärle, D. Fensel: "Knowledge Graph Validation", 2020, https://arxiv.org/abs/2005.01389
- Melo, H. Paulheim: "Detection of Relation Assertion Errors in Knowledge Graphs", Knowledge Capture Conference, 2017, https://dl.acm.org/doi/abs/10.1145/3148011.3148033

### Offenbarung der Erfindung

Demgegenüber werden mit dem Computerimplementierten Verfahren, dem Computerprogramm und der Vorrichtung nach den unabhängigen Ansprüchen Fehler in einem Graph, insbesondere in einem Wissensgraphen vermieden. Fehler sind beispielsweise semantisch falsche Fakten, die in einer Domäne herrschende Gesetzmäßigkeiten, Regeln, Constraints etc. verletzen. Eine Validität des enthaltenen Wissens wird verbessert.

Das computerimplementierte Verfahren zur Erweiterung eines Graphen, insbesondere eines Wissensgraphen, umfasst das Vorgeben einer Eingangsgröße, die eine zu erweiternde Instanz und eine der zu erweiternden Instanz zugeordnete Relation und/oder ein der zu erweiternden Instanz zugehöriges Attribut des Graphen umfasst, Bestimmen einer der Eingangsgröße zugeordneten ersten Eigenschaftsbehauptungsbeschränkung, Bestimmen eines Abfrage-Fragments für die erste Eigenschaftsbehauptungsbeschränkung, Bestimmen einer Abfrage, die eine vorgegebene Kern-Abfrage und das Abfrage-Fragment umfasst, Ausführen der Abfrage auf dem Graphen, wobei ein Ergebnis bestimmt wird, das entweder wenigstens eine zulässige Instanz und/oder wenigstens ein zulässiges Literal für die Erweiterung des Graphen umfasst oder keine Instanz und kein Literal. Die Abfrage, auf Englisch Query, umfasst auch das Abfrage-Fragment, auf Englisch Query-Fragment. Mit der Query werden im Beispiel die für die vorgegebene Instanz zulässigen Instanzen oder Literale unter Beachtung der in der Eigenschaftsbehauptungsbeschränkung definierten Bedingung ermittelt. Es ist möglich, dass die Query selbst keine Instanz und kein Literal liefert, weil insbesondere aufgrund unvollständiger Fakten z.B. bestimmte Vorbedingungen für die Eigenschaftsbehauptungsbeschränkung im Graphen noch nicht definiert sind oder, weil bislang noch keine Instanz existiert, die die Eigenschaftsbehauptungsbeschränkung vollständig erfüllt.

Vorzugsweise sieht das Verfahren vor, dass das erste Ergebnis einem Nutzer angezeigt oder an eine Maschine ausgegeben wird. Dadurch wird dem Nutzer über eine insbesondere graphische Nutzerschnittstelle oder der Maschine über eine Maschine-Maschine-Schnittstelle die Information zur Auswahl der Erweiterung zugänglich gemacht, die auch zu einer fehlerfreien Erweiterung führt.

Vorzugsweise wird eine zweite Eigenschaftsbehauptungsbeschränkung bestimmt, wobei für die zweite Eigenschaftsbehauptungsbeschränkung ein zweites Ergebnis bestimmt wird, das entweder wenigstens eine zulässige Instanz und/oder wenigstens ein zulässiges Literal für die Erweiterung des Graphen umfasst oder keine Instanz und kein Literal, wobei abhängig vom ersten Ergebnis und vom zweiten Ergebnis eine Sequenz von Eingaben des Nutzers oder Eingaben von der Maschine angefordert wird, und der Graph abhängig von der Sequenz erweitert wird, wobei die Sequenz eine Reihenfolge für Abfragen der Eingaben festlegt, in der eine erste Abfrage gemäß des ersten Ergebnisses vor einer zweiten Abfrage gemäß des zweiten Ergebnisses erfolgt, wobei das zweite Ergebnis oder die zweite Abfrage abhängig von einer Eingabe in Erwiderung der ersten Abfrage bestimmt wird. Insbesondere werden schrittweise mehrere Erweiterungen durch Eigenschaftsbehauptungsbeschränkungen vorgenommen. Eine Eigenschaftsbehauptungsbeschränkung, die auf eine andere Eigenschaftsbehauptungsbeschränkung folgt, operiert auf einem veränderten Graphen, wodurch logische Abhängigkeiten berücksichtigt werden. Dadurch werden komplexe, voneinander abhängige Bedingungen schrittweise aufgelöst und berücksichtigt.

Vorzugsweise sieht das Verfahren vor, dass eine Auswahl wenigstens einer zulässigen Instanz für die Erweiterung des Graphen erkannt wird, und der Graph um eine vorgegebene Relation der zu erweiternden Instanz zu dieser Instanz erweitert wird und/oder eine Auswahl wenigstens eines zulässigen Literals für die Erweiterung des Graphen erkannt wird, und der Graph um ein Attribut für die zu erweiternde Instanz erweitert wird. Inkonsistente Erweiterungen werden dadurch vermieden.

Das Bestimmen der ersten Eigenschaftsbehauptungsbeschränkung umfasst vorzugsweise ein Bestimmen der Eigenschaftsbehauptungsbeschränkung, die der zu erweiternden Instanz zugeordnet ist, oder die einer Klasse zugeordnet ist, der die zu erweiternde Instanz zugeordnet ist.

Im Kontext der Beschreibung umfasst ein Property, auf Deutsch Eigenschaft, eine Relation und/oder ein Attribut. Im Kontext der Beschreibung umfasst eine Klasse eine oder mehrere Instanzen. Pro Klasse-Property Paar kann eine Eigenschaftsbehauptungsbeschränkung auf Englisch Property Assertion Constraint vorgesehen sein. Property Assertion Constraints müssen nicht für alle Properties einer jeden Klasse definiert sein. Es kann auch Klassen geben, die keine direkten Instanzen haben. Superklassen sind oftmals als abstrakt deklariert. Diese umfassen selbst keine Instanzen, nur indirekt über eine ihrer Unterklassen. Vorzugsweise ist ein Property Assertion Constraint dort definiert, wo ein solches Property Assertion Constraint in einer Domäne, über die der Graph Wissen enthält, existiert. Wenn kein Property Assertion Constraint definiert ist, kann vorgesehen sein, einen Wertebereich des Property zur Bestimmung einer zulässigen Instanz oder eines zulässigen Literals zu verwenden.

Eine Klasse kann Superklassen haben. Für eine oder mehrere Superklassen können jeweils auch Property Assertion Constraints für deren Properties definiert sein. Dann stehen mehrere klassenspezifische Property Assertion Constraints zur Auswahl, aus denen das Property Assertion Constraint gewählt wird, das in der Klassenhierarchie am nächsten an der Klasse der Instanz ist, idealerweise, falls vorhanden, das Property Assertion Constraint der direkten Klasse der Instanz. Beispielsweise ist die zu erweiternde Instanz einer ersten Klasse zugeordnet. Die erste Klasse ist im Beispiel eine direkte Klasse der zu erweiternden Instanz. Das Bestimmen der Eigenschaftsbehauptungsbeschränkung umfasst vorzugsweise das Bestimmen der Eigenschaftsbehauptungsbeschränkung die einer zweiten Klasse zugeordnet ist, die der ersten Klasse in einer Klassenhierarchie am nächsten ist. Am nächsten, bzw. weitesten unten in der Klassenhierarchie bedeutet beispielsweise, im Wissensgraphen gemäß eines Distanzmaßes am nächsten zu der direkten Klasse der zu erweiternden Instanz. Es kann vorgesehen sein, dass wenn ein Property Assertion Constraint für die direkte Klasse der Instanz definiert ist, dieses dann verwendet wird. Es kann vorgesehen sein, dass ansonsten die Superklassen-Hierarchie der direkten Klasse durchsucht und die Existenz von Property Assertion Constraints für das gegebene Property geprüft wird. Wenn es genau ein solches Property Assertion Constraint gibt, dann wird dieses verwendet. Sollte es mehrere Property Assertion Constraints geben, dann ist das Property Assertion Constraint das zutreffende, dessen Klasse der direkten Klasse am nächsten ist. Diese weist beispielsweise die geringste Anzahl Hierarchieebenen in einer Kette von rdfs:subClassOf Relationen, auf und ist damit am ähnlichsten im semantischen Sinn.

Das Bestimmen der Eigenschaftsbehauptungsbeschränkung umfasst vorzugsweise ein Auffinden eines Constraints in der Graphdatenbank, das für die Instanz gilt. Dadurch wird ein instanzspezifisches Property Assertion Constraint in der Graphdatenbank selbst bestimmt.

Vorzugsweise ist vorgesehen, dass wenn erkannt wird, dass keine relevante Eigenschaftsbehauptungsbeschränkung existiert, die Abfrage ohne ein Abfrage-Fragment bestimmt wird. Dadurch wird eine Erweiterung auch in diesem Fall ermöglicht.

Es kann vorgesehen sein, dass die Eingangsgröße aus einer Graphdatenbank, in welcher der Graph gespeichert ist, insbesondere aus einem Speicher für Tripel des Wissensgraphen, gelesen wird, wobei die Abfrage auf der Graphdatenbank ausgeführt wird. Optional kann vorgesehen sein, dass das Ergebnis für die Erweiterung des Graphen in der Graphdatenbank gespeichert wird.

Die Vorrichtung zur Erweiterung eines Graphen, insbesondere eines Wissensgraphen, ist ausgebildet, das Verfahren auszuführen.

Das Computerprogramm umfasst computerlesbare Instruktionen, bei deren Ausführung durch einen Computer das Verfahren abläuft.

Weitere vorteilhafte Ausführungsformen ergeben sich aus der folgenden Beschreibung und der Zeichnung. In der Zeichnung zeigt:
Fig. 1 eine schematische Darstellung einer Vorrichtung zur Erweiterung eines Graphen,
Fig. 2 ein Flussdiagramm in einem Verfahren zur Erweiterung eines Graphen.

In der Folgenden Beschreibung werden Einschränkungen von Eigenschaften für eine fundierte und/oder fehlervermeidende, semantisch möglichst korrekte Erweiterung eines Graphen verwendet. Dies wird im Folgenden für einen Wissensgraphen am Beispiel eines Resource Description Framework Graphen, RDF Graph, beschrieben, der beispielsweise mit OWL oder SHACL, ausgewertet wird.

Der Wissensgraph kann ein RDF-Graph sein. Der Wissensgraph kann mit OWL erweitert sein. Im Beispiel wird RDFS eingesetzt. RDFS ist eine Erweiterung von RDF, die z.B. rdfs:subClassOf Relation bereitstellt, um eine Klassenhierarchie zu definieren. Der Wissensgraph verwendet beispielsweise RDFS und vorzugsweise OWL. Mit OWL kann eine Unterscheidung in owl:DatatypeProperty (Attribute) und owl:ObjectProperty (Relationen) vorgesehen werden.

SHACL stellt eine Constraint Sprache zur Validierung des Wissensgraphen bereit. SHACL ist eine Ergänzung für einen Wissensgraph, kann also auf einem OWL Wissensgraph angewendet werden.

Das Verfahren ist auch auf Graphen anderer Graphdatenmodelle als das, welches der Wissensgraph bereitstellt anwendbar. Das Verfahren ist auf einen Speicher anwendbar, in dem Tripel des Wissensgraphen gespeichert sind. Das Verfahren ist auf Graphdatenbanken im Allgemeinen anwendbar. Das Verfahren ist auch für andere Beschreibungssprachen und Constraintsprachen anwendbar.

Das im Beispiel eingesetzte Resource Description Framework, RDF, ist in der W3C Recommendation RDF 1.1 Konzepte und abstrakten Syntax vom 25. Februar 2014 beschrieben, die unter https://www.w3.org/TR/rdf11-concepts/ abrufbar ist.

Der Wissensgraph umfasst im Beispiel Knoten, die Entitäten repräsentieren, und Kanten, die Relationen oder Attribute repräsentieren. Relationen und Attribute werden in RDF als "Property" und mit Bezug auf Tripel, die Subjekt, Prädikat und Objekt eines Wissensgraphen definieren, als "Prädikat" bezeichnet.

Der Wissensgraph wird im Beispiel durch einen Satz von Tripeln repräsentiert. Ein Tripel umfasst im Beispiel ein Subjekt, ein Prädikat und ein Objekt. Im Beispiel sind RDF Tripel vorgesehen. Ein RDF Tripel umfasst im Beispiel ein Subjekt, beispielsweise einen Internationalized Resource Identifier, IRI, eines Knotens, der das Subjekt repräsentiert. Das RDF Tripel umfasst im Beispiel ein Objekt, beispielsweise einen Internationalized Resource Identifier, IRI, eines Knotens, der das Objekt repräsentiert, oder eines Literals das das Objekt repräsentiert. Das RDF Tripel umfasst ein Prädikat, beispielsweise ein Internationalized Resource Identifier, IRI, einer Kante, die das Prädikat repräsentiert.

Der IRI ist im Beispiel ein Unicode string. Der Unicode string ist im Beispiel gemäß des Syntaxes aus RFC3987 aus Januar 2005 formatiert, der unter http://www.ietf.org/rfc/rfc3987.txt abrufbar ist.

Das Literal umfasst im Beispiel eine lexikalische Form und einen IRI für einen Datentyp. Die lexikalische Form ist im Beispiel ein Unicode string. Es gibt auch Literale ohne explizit definierten Datentyp, diese sind beispielsweise als Literal mit dem Typ string oder mit dem Typ integer verwendbar. Andere Fälle sind ebenfalls möglich.

Der IRI für den Datentyp identifiziert den Datentyp, der festlegt, wie die lexikalische Form auf einen Wert für das Literal abgebildet wird.

Das Literal kann zudem ein Kennzeichen für eine Sprache enthalten. Das Kennzeichen ist z.B. wie in der unter http://tools.ietf.org/html/bcp47 verfügbaren IETF Best Current Practice "Tags for Identifying Languages" vom September 2009 beschrieben ausgebildet.

Im Wissensgraphen ist Wissen über eine Domäne gespeichert. Knoten im Wissensgraphen repräsentieren im Beispiel Klassen oder Instanzen. Werte von Attributen werden im Wissensgraph als Literale repräsentiert. Properties als solches, oder SHACL NodeShapes und SHACL PropertyShapes werden, wenn der Wissensgraph OWL verwendet, selber auch durch Knoten im Wissensgraph repräsentiert. Eine Instanz ist im Beispiel mindestens einer direkten Klasse zugeordnet. Das bedeutet, es existiert im Beispiel mindestens ein Tripel "Instanz-IRI rdf:type Klassen-IRI". Für Klassen können Superklassen definiert sein. Dies wird beispielsweise durch Triples der Form "Klassen-IRI rdf:subClassOf Klassen-IRI2" definiert. SHACL-Constraints können für Klassen oder Properties definiert sein. Properties können Relationen, z.B. object properties, oder Attribute, z.B. datatype properties, sein. Mittels SHACL können klassen- bzw. propertyspezifische Constraints definiert werden. Diese SHACL Constraints sind im Beispiel durch mehrere Tripel syntaktisch repräsentiert, und entweder im Falle eines Klassenconstraints einem SHACL NodeShape oder im Falle eines Property-Constraints einem SHACL PropertyShape per Tripel zugewiesen.

Im Beispiel sind Einschränkungen von Properties vorgesehen. Diese können mit OWL oder mit SHACL definiert sein. Im Kontext dieser Beschreibung werden zusätzlich zu diesen Einschränkungen weitere Einschränkungen definiert. Diese zusätzlichen Einschränkungen werden im Kontext dieser Beschreibung als Eigenschaftsbehauptungsbeschränkung und auf Englisch als Property Assertion Constraint bezeichnet. Die Property Assertion Constraints können im Wissensgraphen selber enthalten sein oder außerhalb des Wissensgraphen gespeichert sein. Beispielsweise definiert eine Einschränkung eines Property einen Wertebereich und die zusätzliche Einschränkung eine weitere Einschränkung dieses Wertebereichs. Die Einschränkung ist z.B. via SHACL oder via OWL definiert, und das Property Assertion Constraint muss zusätzlich dazu erfüllt sein.

SHACL PropertyShapes sind eine Möglichkeit, mit der eine Definition von Property Assertion Constraints im Wissensgraph repräsentierbar, also hinterlegbar ist. Es gibt auch andere Möglichkeiten. Z.B. kann vorgesehen sein, Property Assertion Constraints in einer Ontologie oder extern in einer separaten Datei zu definieren bzw. zu speichern.

Im Beispiel wird ein Property Assertion Constraint im RDF Graphen gespeichert.

Im Wissensgraphen sind Instanzen, beispielsweise Dinge aus der Domäne, Knoten zugeordnet, die direkt über eine Relation oder indirekt über eine Kette von Relationen miteinander verbunden sind. Eine Relation wird im Wissensgraph durch eine Kante zwischen zwei Knoten repräsentiert. Die Instanzen sind oftmals in starker Vernetzung, d.h. mit vielen Relationen miteinander verbunden. Diese Verbindungen beschreiben Wissen und Kausalitäten in expliziter symbolischer Form. Den Instanzen können zudem Attribute zugeordnet sein. Attribute werden im Beispiel durch Literale repräsentiert.

Das im Folgenden beschriebene Verfahren ist auch für andere Graphen als Wissensgraphen anwendbar. Das im Folgenden beschriebene Verfahren ist auch für andere Einbettungen der Einschränkungen von Eigenschaften anwendbar.

Der Wissensgraph ermöglicht eine logische Inferenz, d.h. eine automatische Ableitung von neuem Wissen durch Anwendung von Axiomen und Regeln, die z.B. die Gesetzmäßigkeiten in einer bestimmten Domäne beschreiben. Der Wissensgraph repräsentiert im Beispiel das bestehende Wissen, z.B. Fakten und Modelle, die die reale Welt beschreiben. Beispielhafte Wissensgraphen betreffen eine der Domänen Automobil, Intelligent Building, Smart Home.

Eine Vollständigkeit, Korrektheit und/oder Konsistenz des durch den Wissensgraphen bereitgestellten Wissens ist für eine korrekte logische Inferenz wünschenswert.

Das im folgenden beschriebene Verfahren ermöglicht es, vor einer Änderung eines bereits bestehenden Wissensgraphen zu prüfen, was zulässige Ausprägungen des beschriebenen Wissens sind, und was nicht. Das bedeutet, statt einen bestehenden Wissensgraphen auf seine Vollständigkeit, Korrektheit und Konsistenz zu überprüfen, wird eine Prüfung der Erweiterungen durch Property Value Assertions, vorgenommen, bevor der Wissensgraph erweitert wird. Die Erweiterung des Wissensgraphen durch eine Zuweisung von Instanzen oder Literalen via Property zu einer Instanz wird im Kontext dieser Beschreibung als Property Value Assertion bezeichnet. Dadurch werden semantisch inkorrekte bzw. falsche Fakten vermieden, statt semantisch inkorrekte bzw. falsche Fakten im Wissensgraphen zu detektieren und zu beheben.

Mit OWL und/oder SHACL können Constraints, d.h. Bedingungen, überprüft werden. Eine Bedingung kann insbesondere logisch oder mathematisch sein. SHACL erlaubt es auch Integrity Constraints, d.h. eine Integrität des Wissensgraphen betreffende Constraints, mittels z.B. SPARQL zu formalisieren, dies sind dann Queries, die auf dem Wissensgraph ausgeführt werden und invalide Fakten detektieren können. Mit OWL und/oder SHACL können sowohl ein einfaches Constraint als auch ein komplexes Constraint überprüft werden.

Das einfache Constraint betrifft zum Beispiel eine Kardinalität von Relationen oder Attributen. Das einfache Constraint gibt beispielsweise an, ob eine Relation oder ein Attribut obligatorisch ist, d.h. mindestens ein Wert erforderlich ist, oder nicht. Das einfache Constraint gibt beispielsweise eine Schranke für eine maximale Anzahl von Werten einer Relation oder eines Attributs an. Die Schranke ist z.B. ein Wert oder fünf Werte. Das einfache Constraint kann auch vorgeben, dass keine untere/obere Schranke existiert, z.B., dass beliebig viele Werte möglich sind. Das einfache Constraint gibt beispielsweise einen zulässigen Wertebereich oder zulässige Wertebereiche von Relationen an. Der Wertebereich gibt beispielsweise an auf Instanzen welcher Klasse eine Relation verlinken darf. Das einfache Constraint gibt beispielsweise für ein Attribut an, welche Datentypen und/oder Werte möglich sind. Mögliche Werte können z.B. Ganzzahlwerte insbesondere zwischen 0 und 100 sein. Mögliche Werte können z.B. String-Werte sein, insbesondere solche, die einen vorgegebenen regulären Ausdruck erfüllen.

Das komplexe Constraint wird im Beispiel durch ein Integrity Constraint formuliert, z.B. ein SPARQL-basiertes SHACL Constraint. SPARQL bezeichnet die SPARQL Protocol And RDF Query Language.

Das Property Assertion Constraint umfasst im Beispiel ein Muster für eine Abfrage. Es kann vorgesehen sein, dass das Property Assertion Constraint zudem andere Bestandteile umfasst. Ein anderer Bestandteil umfasst beispielsweise ein Klasse-Property-Paar, die Instanz, für die das Property Assertion Constraint gilt, eine Beschreibung des Property Assertion Constraints in einer Sprache oder mehreren Sprachen und/oder ein Pfad zu einem insbesondere vom Property Assertion Constraint abhängigen Property Assertion Constraint oder mehrere Pfade zu anderen insbesondere vom Property Assertion Constraint abhängigen Property Assertion Constraints. Das Muster für die Abfrage wird im Folgenden als Query-Pattern bezeichnet. Das Query-Pattern kann einfache und/oder komplexe Constraints umfassen. Das Query-Pattern macht Zusammenhänge und Bedingungen im Wissensgraphen spezifizierbar und validierbar.

Das Property Assertion Constraint kann in SPARQL-Syntax oder im Falle einer Graphdatenbank mit einer anderen Graphbasierten Querysprache formuliert sein. SPARQL ist eine Abfragesprache, d.h. Query-Sprache, für Wissensgraphen, die die Formulierung einfacher und/oder komplexer Zusammenhänge und Bedingungen ermöglicht. Eine Query, auf Deutsch Abfrage, ist eine Abfrage, die beispielsweise den Wissensgraphen und darin hinterlegtes Wissen betreffen kann. Im Beispiel wird SPARQL 1.1 gemäß der W3C Recommendation vom 21. März 2013 verwendet, die unter https://www.w3.org/TR/spargl11-overview/ verfügbar ist.

Das Verfahren erzeugt SPARQL-Queries dynamisch für einen jeweiligen Kontext einer gegebenen Instanz. Im Beispiel werden Query-Patterns von Property Assertion Constraints, die Query-Fragmente darstellen, zur Laufzeit in eine Kern-Abfrage, auf Englisch Core-Query, eingebettet. Im Beispiel wird ein Query-Fragment oder mehrere Query-Fragmente in bestimmten Situationen getriggert, d.h. zusammen mit der Core-Query in einer Query ausgeführt.

Die Core-Query ist ohne Query-Fragment in der Lage, alle prinzipiell zulässigen Instanzen oder Literale für eine gegebene Relation oder ein gegebenes Attribut für eine gegebene Instanz zu ermitteln. Hierzu verwendet die Core-Query im Beispiel eine für die Relation oder das Attribut der Klasse in der Ontologie definierten Wertebereich. Die Core-query ist generisch und für alle Property Assertion Constraints verwendbar. Die Core-query wird im Beispiel per Parametrierung an den jeweiligen Wertebereich, der für ein gegebenes Instanz-Property Paar definiert ist, angepasst. Beispielsweise ist der Wertebereich mittels rdfs:range Property in OWL oder per SHACL Constraint definiert. rdfs:range ist ein Beispiel für ein Property nach dem RDF Schema 1.1 gemäß der W3C Recommendation vom 25 Februar 2014, die unter https://www.w3.org/TR/rdfschema/ abrufbar ist.

Das Query-Fragment erweitert die Core-Query durch die zusätzlichen Bedingungen, die das Query-Fragment in Form wenigstens eines Suchmusters spezifiziert. Ein Suchmuster wird im Folgenden als Graph Pattern bezeichnet. Die daraus resultierende Query kann dadurch deutlich komplexere Bedingungen und Zusammenhänge beschreiben und prüfen.

Durch Ausführen der Query auf dem Wissensgraph wird ein Ergebnis zur Erweiterung des Wissensgraphen bestimmt. Das Ergebnis umfasst im Beispiel entweder wenigstens eine zulässige Instanz und/oder wenigstens ein zulässiges Literal für die Erweiterung des Wissensgraphen oder weder eine Instanz noch ein Literal, wenn die Query ergebnislos verläuft, d.h. weder eine Instanz noch ein Literal gefunden wird.

Beispielsweise wird eine Eingangsgröße vorgegeben, die eine zu erweiternde Instanz und eine der zu erweiternden Instanz zugeordnete Relation und/oder ein dieser Instanz zugehöriges Attribut des Wissensgraphen umfasst.

Mit der Eingangsgröße wird im Beispiel wenigstens ein Property Assertion Constraint bestimmt, das der Eingangsgröße zugeordnet ist.

Für das Property Assertion Constraint wird im Beispiel ein vorgegebenes Query-Fragment bestimmt. Das Query-Fragment wird an einer dafür in der Core-Query vorgesehen Stelle in die Core-Query eingebettet. Das Ergebnis dieser Einbettung wird im Kontext dieser Beschreibung als Query bezeichnet.

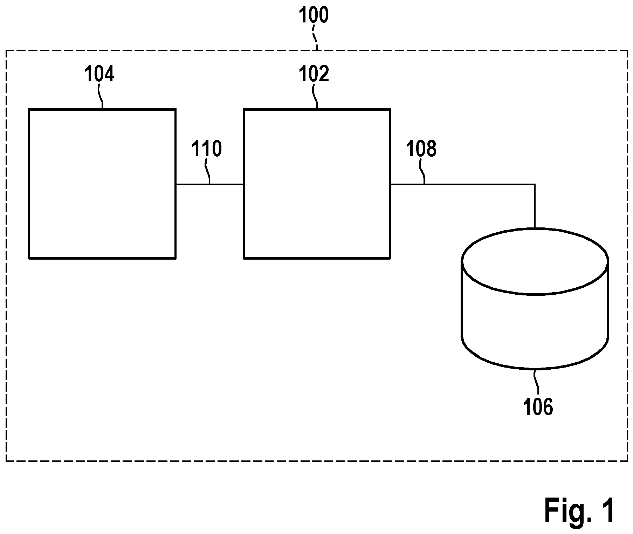

In Figur 1 ist eine Vorrichtung 100 dargestellt.

Die Vorrichtung 100 umfasst eine Recheneinrichtung 102, eine Schnittstelle 104 und einen Speicher 106. Die Recheneinrichtung 102 ist im Beispiel über einen Datenleitung 108 mit dem Speicher 106 verbunden. Der Speicher 106 kann auch außerhalb der Vorrichtung 100 angeordnet sein. Die Recheneinrichtung ist im Beispiel über eine Datenleitung 110 mit der Schnittstelle 104 verbunden.

Die Vorrichtung 100 ist zur Verwaltung und Erweiterung von Graphen, insbesondere Wissensgraphen ausgebildet. Die Recheneinrichtung 102 und der Speicher 106 umfasst im Beispiel eine Graphdatenbank für den Graphen oder insbesondere für den Wissensgraphen einen Speicher für Triple des Wissensgraphen. Der Speicher 106 ist ausgebildet, das Wissen aus dem Graphen, insbesondere einem Wissensgraph oder mehreren Wissensgraphen bereitzustellen. Dies ermöglicht generische, selbstadaptive, domänenunabhängige Anwendungen, deren Aufwand zur Erstellung, Pflege und Anpassung deutlich gesenkt werden kann, und die wesentlich vielseitiger und flexibler einsetzbar sind. Die Erweiterung von Graphen, insbesondere Wissensgraphen stellt einen essentiellen Vorgang dar. Dieser kann durch einen Menschen mittels eines User Interface, z.B. eines browser-basierten Frontends, oder durch eine Maschine erfolgen. Die Schnittstelle 104 ist zur Kommunikation mit dem User-Interface oder der Maschine ausgebildet. Die Recheneinrichtung 102 ist im Beispiel ausgebildet, eine Anwendung auszuführen, mit der Wissen aus der Graphdatenbank, im Beispiel dem Speicher für Tripel des Wissensgraphen, über die Schnittstelle 104 abgerufen, bereitgestellt, erweitert, verifiziert und/oder verändert werden kann. Beispielsweise ist die Schnittstelle 104 zur Programmierung der Anwendung ausgebildet.

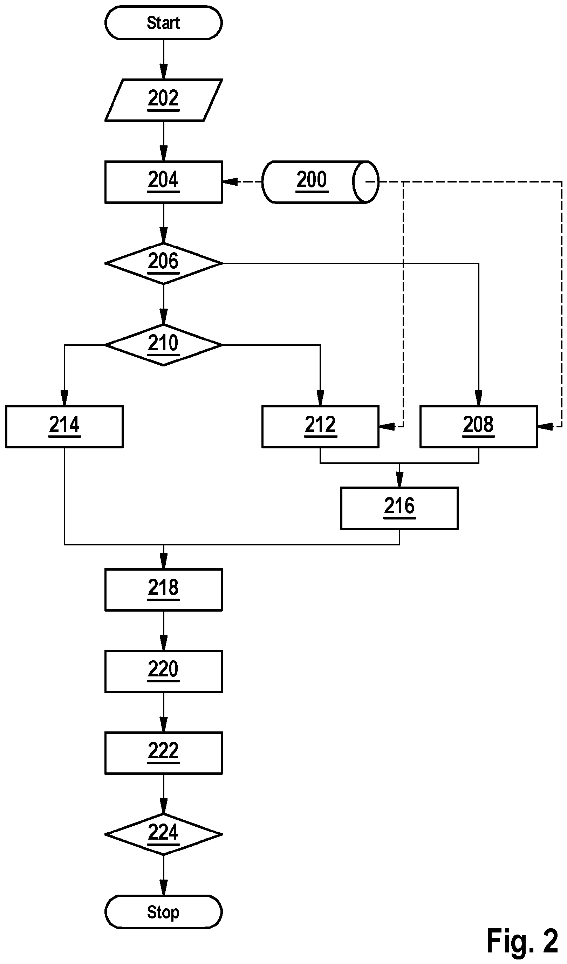

Das Verfahren wird mit Bezug auf Figur 2 am Beispiel eines Wissensgraphen 200 beschrieben. Das Verfahren ist für Graphdatenbanken und im Speziellen für einen Speicher, in dem Triple des Wissensgraphen 200 gespeichert sind, anwendbar. Das Verfahren startet im Beispiel, wenn der Wissensgraph 200 an einer zu erweiternden Instanz durch weitere Relationen dieser Instanz zu anderen Instanzen oder durch wenigstens einen Attributwert für diese Instanz erweitert werden soll.

Nach dem Start des Verfahrens wird ein Schritt 202 ausgeführt.

Im Schritt 202 wird die zu erweiternde Instanz vorgegeben. Zudem wird eine Relation oder ein Attribut vorgegeben. Für eine Klasse und, sofern vorhanden, eine Superklasse oder mehrere Superklassen der Instanz ist definiert, welche Relationen oder Attribute für die Instanz gültig sind und für Property Value Assertions verwendet werden können. Für Klassen ist definiert, welche Relationen bzw. Attribute für alle Instanzen der Klasse verwendet werden können. Dies erfolgt im Beispiel per rdfs:domain (Definitionsbereich) in RDF/OWL, oder per SHACL. In einer Klasse sind im Beispiel die Properties gültig, die in der Klasse selber oder in einer ihrer Superklassen definiert sind. Eine Klasse erbt vorzugsweise alle Properties von allen Superklassen, und kann zudem weitere Properties hinzufügen.

Anschließend wird ein Schritt 204 ausgeführt.

Im Schritt 204 wird wenigstens ein relevantes Property Assertion Constraint abgefragt oder abgerufen. Die Abfrage kann im Wissensgraph 200 erfolgen, wenn das Property Assertion Constraint dort hinterlegt ist. Das Property Assertion Constraint kann von einer anderen Quelle abgerufen werden, auf der Property Assertion Constraints gespeichert sind. Vorzugsweise werden mehrere Property Assertion Constraints abgefragt oder abgerufen.

Für die jeweilige zu erweiternde Instanz und die jeweilige Relation und/oder das jeweilige Attribut wird im Beispiel im bestehenden Wissensgraph 200 geprüft, ob relevante Property Assertion Constraints existieren.

Wenn ein relevantes Property Assertion Constraint existiert, wird dieses bestimmt. Es können mehrere relevante Property Assertion Constraints existieren. Aus diesen wird wie folgt ausgewählt. Anderenfalls wird kein Property Assertion Constraint bestimmt. Im Beispiel werden mehrere Fälle unterschieden.

Fall 1: Ein instanzspezifisches Property Assertion Constraint existiert, d.h. ein Constraint, dass alleine für die gegebene Instanz und Relation bzw. Attribut gilt.

Fall 2: Für eine Klasse der Instanz, oder eine ihrer Superklassen, existiert ein Property Assertion Constraint.

Im Beispiel sind die Property Assertion Constraints in einer Ontologie für den Wissensgraphen 200 auf Ebene von SHACL Node Shapes und ihren enthaltenen SHACL Property Shapes definiert. Im Beispiel sind die Property Assertion Constraints in den Wissensgraphen 200 eingebettet. Im Beispiel sind die Property Assertion Constraints von dort auslesbar und/oder anwendbar. Die Property Assertion Constraints können auch anderweitig hinterlegt sein, an anderer Stelle im Wissensgraph 200 oder außerhalb des Wissensgraphen 200.

Fall 3: Es existiert kein relevantes Property Assertion Constraint.

Es können auch andere Falldefinitionen verwendet werden. Beispielsweise kann nur der Fall 1, nur der Fall 2 oder ein anderer Fall zusätzlich zu oder statt einem der Fälle 1 bis 3 vorgesehen sein.

In einem Schritt 206 wird geprüft, ob der Fall 1 vorliegt. Wenn der Fall 1 vorliegt, wird ein Schritt 208 ausgeführt. Anderenfalls wird ein Schritt 210 ausgeführt.

Im Schritt 208 wird ein Query-Fragment für das Property Assertion Constraint bestimmt. Im Beispiel wird ein zuvor für dieses Property Assertion Constraint hinterlegtes Query-Fragment bestimmt. Im Beispiel ist das Property Assertion Constraint für die Kombination aus Instanz UND property vorgesehen.

Im Schritt 210 wird geprüft, ob der Fall 2 vorliegt. Wenn der Fall 2 vorliegt, wird ein Schritt 212 ausgeführt. Anderenfalls wird ein Schritt 214 ausgeführt.

Im Schritt 212 wird ein Query-Fragment für das Property Assertion Constraint bestimmt. Im Beispiel wird ein zuvor für dieses Property Assertion Constraint hinterlegtes Query-Fragment bestimmt. Wenn mehrere Property Assertion Constraints für die Klasse und seine Superklassen existieren, kann vorgesehen sein, das Property Assertion Constraint auszuwählen, das in einer Hierarchie, die für die Klasse und ihre Superklassen definiert ist, am weitesten unten in der Hierarchie ist.

Im Beispiel gibt es für eine Klasse maximal ein Property Assertion Constraint für ein bestimmtes Property. Sofern Superklassen existieren, kann es mehrere Property Assertion Constraints geben. In einem möglichen Fall sind entweder in der direkten Klasse der Instanz selber und in ein oder mehreren Superklassen je ein Property Assertion Constraint für das Property definiert. In einem möglichen Fall ist in der direkten Klasse der Instanz ein Property Assertion Constraint definiert, und in keiner Superklasse. In einem möglichen Fall ist in der direkten Klasse kein solches Property Assertion Constraint definiert, wobei in einer oder mehreren Superklassen, je Superklasse ein Property Assertion Constraint definiert ist.

Im Beispiel ist folgende Priorität implementiert: Wenn ein Property Assertion Constraint für die direkte Klasse der Instanz existiert, dann wird dieses gewählt. Nur wenn dies nicht der Fall ist, also kein Property Assertion Constraint für die direkte Klasse und das Property definiert ist, und mehrere Property Assertion Constraint existieren, dann wird ein Property Assertion Constraint der Superklassen gewählt, nämlich wie beschrieben das Property Assertion Constraint der nächsten Superklasse. Ansonsten wird beispielsweise das eine und einzige Property Assertion Constraint der einen Superklasse gewählt, für die ein Property Assertion Constraint definiert ist.

Ein Beispiel für ein Property Assertion Constraint zum Auffinden einer kompatiblen Hardware für ein die Hardware ansteuerndes oder regelndes Gerät ist im Folgenden angegeben. Dabei wird das Property Assertion Constraint als Erweiterung eines SHACL Property Shapes in RDF definiert:

```
 sc:ControllingDevice
 a owl:Class ;
 a sh:NodeShape ;
 sh:property [
        a sh:PropertyShape ;
        sh:path sc:hasHardware ;
        sh:class sc:Hardware ;
        sh:nodeKind sh:IRI ; sh:name "Hardware";
        sh:minCount 1 ;
        sh:maxCount 1 ;
        pac:pattern """BIND (%%instanceIRI%% as ?subjectlnstance).
               ?subjectlnstance sc:belongsTo ?productFamily.
               ?instance sc:releasedFor ?productFamily.""" ;
        pac:comment "A product can only use hardware components released
        for the corresponding product family"@en ;
   pac:comment "Ein Produkt kann nur Hardwarebausteine verwenden, die für
   die entsprechende Produktfamilie freigegeben wurden"@de ;
   ];
```

Das bedeutet, sc:ControllingDevice ist sowohl als OWL Klasse als auch als SHACL Node Shape deklariert. Das SHACL Property sh:property fügt der SHACL Node Shape Definition eine SHACL Property Shape Definition hinzu, die verschiedene Constraints für das Property sc:hasHardware der Klasse definiert. Im Beispiel wird das SHACL Property sh:class dazu verwendet, den Wertebereich des Propertys zu definieren. Dieses Constraint definiert für alle Instanzen aus der Klasse sc:ControllingDevice, dass nur die Instanzen der Klasse sc:Hardware oder, implizit definiert, einer ihrer Subklassen als Werte für das Property zulässig sind. Im Beispiel wird zudem eine Minimum-Kardinalität (sh:minCount) und eine Maximum-Kardinalität (sh:maxCount) von 1 definiert. Dies bedeutet für jede Instanz aus der Klasse sc:ControllingDevice, dass genau eine Relation sc:hasHardware mit einer Instanz aus der Klasse sc:Hardware definiert sein muss.

Für eine vorgegebene Instanz der Klasse sc:ControllingDevice, d.h. das Subjekt, kann das Property Assertion Constraint im Beispiel alle zulässigen Instanzen ermitteln, die als Objekt der Relation sc:hasHardware mit dem Subjekt infrage kommen. Die zulässigen Instanzen müssen aus der Klasse sc:Hardware sein und folgende Bedingung erfüllen: Die Hardware muss für dieselbe Produktfamilie freigegeben sein der auch das Gerät zugeordnet ist.

Anschließend wird der Schritt 216 ausgeführt.

Im Schritt 214 wird eine Query gebildet, die die Core-Query ohne Query-Fragment umfasst. Dieser Fall tritt im Beispiel ein, wenn weder der Fall 1 noch der Fall 2 erkannt wird. Die Core-Query wird in diesem Fall nur parametrisiert, also für einen jeweils definierten Wertebereich angepasst.

Ein Beispiel für eine Core-Query wird im Folgenden angegeben und beschrieben:

Im Beispiel wird eine Wertebereich-Klasse eingefügt. In Zeile 06 der Core Query: hier wird %%rangeClassIRI%% ersetzt durch die IRI der definierten Wertebereich-Klasse. Es können aber auch mehrere Wertebereich-Klassen definiert sein. Dann wird eine entsprechend erweiterte Core-Query verwendet, die es erlaubt mehrere Klassen als Parameter einzufügen. Beispielsweise wird für mehrere Klassen die logische Komponente sh:or aus SHACL verwendet. In diesem Fall wird die Property Assertion Constraint Core-Query um eine oder mehrere UNION-Blöcke mit zusätzlichem BIND Ausdruck ergänzt. Je zusätzlicher Wertebereich-Klasse wird im Beispiel eine derartige Ergänzung vorgenommen.

```
 01 PREFIX rdfs: <http://www.w3.org/2000/01/rdf-schema#>
 02 PREFIX owl: <http://www.w3.org/2002/07/owl#>
 03 SELECT DISTINCT ?instance ?class ?label
 04 WHERE {
 05     # %%PACPatternPlaceholder%%
 06     BIND (%%rangeClassIRI%% AS ?superClass).
 07     ?superClass a owl:Class.
 08     ?class rdfs:subClassOf* ?superClass.
 09     ?instance a ?class.
 10     OPTIONAL {?instance rdfs:label ?label.}
 11 }
```

In Zeile 05 ist in der Core-Query ein Platzhalter, PACPatternPlaceholder, vorgesehen, der im Beispiel durch das Query-Fragment für die Property Assertion Constraint ersetzt wird, wenn dieser existiert, und anderenfalls nicht ersetzt wird.

Anschließend wird ein Schritt 218 ausgeführt.

Im Schritt 216 wird eine Query bestimmt, die die Core-Query und das Query-Fragment umfasst.

Im Beispiel wird in Zeile 05 der Core-Query der Platzhalter, PACPatternPlaceholder, durch das Query-Fragment für die Property Assertion Constraint ersetzt. Außerdem wird die IRI der zu erweiternden Instanz aus der Eingangsgröße in das Query-Fragment an die Stelle des Platzhalters %% instanceIRI%% eingefügt.

Im Folgenden wird ein beispielhafte Query eines Property Assertion Constraint wiedergegeben:

```
 PREFIX rdfs: <http://www.w3.org/2000/01/rdf-schema#>
 PREFIX owl: <http://www.w3.org/2002/07/owl#>
 SELECT DISTINCT ?instance ?class ?label
 WHERE {
         BIND (d:Room_Temp_Controller_A as ?subjectlnstance).
        ?subjectlnstance sc:belongsTo ?productFamily.
        ?instance sc:releasedFor ?productFamily.
         BIND (sc:Hardware AS ?superClass).
        ?superClass a owl:Class.
        ?class rdfs:subClassOf* ?superClass.
        ?instance a ?class.
        OPTIONAL {?instance rdfs:label ?label.}
 }
```

Anschließend wird der Schritt 218 ausgeführt.

Im Schritt 218 wird die Query auf dem Wissensgraph 200 ausgeführt. Das Ergebnis der Query umfasst im Beispiel wenigstens eine zulässige Instanz und/oder wenigstens ein zulässiges Literal, wenn ein solches existiert. Anderenfalls umfasst das Ergebnis der Query weder eine zulässige Instanz noch ein zulässiges Literal.

Mit der Query werden im Beispiel die für die vorgegebene Instanz zulässigen Instanzen oder Literale ermittelt. Sofern die Query auch das Query-Fragment umfassen, erfolgt dies unter Beachtung der im Property Assertion Constraint definierten Bedingung oder der im Property Assertion Constraint definierten Bedingungen.

Es kann auch vorgesehen sein, mit einer Query zulässige Literale für Attribute zu bestimmen.

Property Assertion Constraints für Attribute können eine Menge zulässiger Literale bestimmen. Diese können beispielsweise als eine Menge von strings (string datatype properties) oder eine Menge von Zahlen (Ganzzahl-Attribute) bestimmt werden.

Attribute können gültige bzw. ungültige Intervalle insbesondere für numerische Datentypen, z.B. natürliche Zahlen, reelle Zahlen, und Datumsangaben, z.B. xsd:date, xsd:dateTime bestimmen. Gültige bzw. ungültige Intervalle sind beispielsweise für Angaben X,Y: von X; bis Y; größer X; kleiner Y, oder Kombinationen davon. Gültige Intervalle geben beispielsweise einen Wertebereich an aus dem Werte gewählt werden dürfen. Werte außerhalb des Wertebereichs dürfen nicht gewählt werden. Ungültige Intervalle geben beispielsweise einen Wertebereich an aus dem Werte nicht gewählt werden dürfen. Werte außerhalb des Wertebereichs dürfen gewählt werden.

Es kann auch eine black list vorgesehen sein, d.h. ein Wert oder eine Liste von Werten eines Datentypens, die nicht verwendet werden dürfen, aber alle anderen schon.

Für Strings kann vorgesehen sein, dass reguläre Ausdrücke erzeugt werden, die einer Anwendung erlauben, selber die gültigen oder ungültigen Strings zu ermitteln.

Anschließend wird ein Schritt 220 ausgeführt.

Im Schritt 220 kann vorgesehen sein, diese zulässigen Instanzen oder Literale einem Nutzer über die Schnittstelle 104 im Frontend anzuzeigen.

Im Schritt 220 kann vorgesehen sein, die zulässigen Instanzen oder Literale über die Schnittstelle 104 einer Maschine zu übergeben.

Anschließend wird ein Schritt 222 ausgeführt.

Im Schritt 222 wird eine Auswahl wenigstens einer zulässigen Instanz und/oder wenigstens eines zulässigen Literals erkannt.

Es kann vorgesehen sein, dass der Nutzer aus den über die Schnittstelle 104 ausgegebenen, am Frontend angezeigten zulässigen Instanzen oder Literalen wählen kann. Es kann vorgesehen sein, dass eine vom Nutzer am Frontend ausgewählte Instanz oder ein vom Nutzer am Frontend ausgewähltes Literal an der Schnittstelle 104 erkannt und/oder verwendet wird oder dass mehrere vom Nutzer ausgewählte Instanzen oder Literale an der Schnittstelle 104 erkannt und/oder verwendet werden.

Es kann vorgesehen sein, dass vom Nutzer am Frontend nicht ausgewählte Instanzen oder Literale nicht verwendet werden.

Es kann vorgesehen sein, dass die Maschine aus den von der Schnittstelle 104 übergebenen zulässigen Instanzen oder Literalen wählen kann. Es kann vorgesehen sein, dass eine von der Maschine insbesondere über die Schnittstelle 104 ausgewählte Instanz oder ein von der Maschine insbesondere über die Schnittstelle 104 ausgewähltes Literal erkannt und/oder verwendet wird. Es kann vorgesehen sein, dass mehrere von der Maschine insbesondere über die Schnittstelle 104 ausgewählte Instanzen oder Literale erkannt und/oder verwendet werden.

Es kann vorgesehen sein, dass von der Maschine nicht ausgewählte Instanzen oder Literale nicht verwendet werden.

Der Wissensgraph 200 wird beispielsweise um eine vorgegebene Relation zur ausgewählten Instanz oder zu ausgewählten Instanzen erweitert. Der Wissensgraph 200 wird beispielsweise um das Literal als Attributwert für die vorgegebene Instanz erweitert. Es kann auch vorgesehen sein, dass der Wissensgraph 200 um Literale als Attributwerte für die vorgegebene Instanz erweitert wird, insbesondere, wenn mehrere Literale zulässig und/oder ausgewählt sind.

Im Fall 3 wird die Core-Query ohne Veränderung, d.h. ohne ein Property Assertion Constraint, auf dem Wissensgraph 200 ausgeführt. Die Query ermittelt den standardmäßig definierten Wertebereich der Relation bzw. des Attributs. Der Wissensgraph 200 wird im Beispiel im Fall 3 ebenfalls erweitert. Das Verfahren stellt jedoch im Fall 3 keine spezifische informierte Verfeinerung und/oder Auswahl von Werten bereit.

Anschließend wird ein Schritt 224 ausgeführt.

Im Schritt 224 wird geprüft, ob eine weitere Erweiterung des Wissensgraphen 200 erfolgen soll, oder nicht. Beispielsweise wird eine Abfrage an den Nutzer oder die Maschine gesendet. Wenn eine Antwort erkannt wird, wonach eine weitere Erweiterung erfolgen soll, wird der Schritt 202 ausgeführt. Anderenfalls endet das Verfahren im Beispiel.

Die Property Assertion Constraints sind im Beispiel in instanzspezifische Property Assertion Constraints, d.h. Fall 1, und klassenspezifische Property Assertion Constraints, d.h. Fall 2, unterteilt. Es können folgende zwei Untertypen unterschieden sein:
Instanz-abhängige Property Assertion Constraints: Dies sind Property Assertion Constraints die eine gegebene zu erweiternde Instanz mit einbeziehen.
Instanz-unabhängige Property Assertion Constraints: Dies sind Property Assertion Constraints die unabhängig von der zur erweiternden Instanz und ihrer Umgebung im Wissensgraphen 200 sind.
Instanz-abhängige Property Assertion Constraints definieren beispielsweise Bedingungen, die die jeweilige zu erweiternde Instanz und/oder mit ihr verbundenen Instanzen erfüllen müssen.

Property Assertion Constraints können zulässige oder unzulässige Abhängigkeiten zwischen Relationen vorgeben, die einer zu erweiternden Instanz zuordenbar sind. Property Assertion Constraints können zulässige oder unzulässige Abhängigkeiten von Attributen vorgeben, die einer zu erweiternden Instanz zuordenbar sind. Property Assertion Constraints können auch Attribute von anderen Instanzen umfassen, die mit der Instanz über eine oder mehrere Kanten des Wissensgraphen 200 verbunden sein können. Property Assertion Constraints können zulässige oder unzulässige Abhängigkeiten zwischen Relationen und Attributen vorgeben, die einer zu erweiternden Instanz zuordenbar sind. Es kann vorgesehen sein, dass diese Abhängigkeiten mit einer bestimmten Reihenfolge berücksichtigt werden. Die Reihenfolge gibt beispielsweise an, in welcher Reihenfolge der Wissensgraph 200 erweitert werden soll. Daraus folgt im Beispiel eine Reihenfolge, in der die aufgefundenen Property Assertion Constraints bei der Erweiterungen des Wissensgraphen 200 angewendet werden. Beispielsweise kann vorgesehen sein, mit den Property Assertion Constraints zunächst die Relationen und/oder Attribute zu definieren, die Voraussetzung für andere Relationen und/oder Attribute schaffen, damit deren Property Assertion Constraints angewendet werden können. Beispielsweise werden Relationen und/oder Attribute zuerst definiert, die in anderen Property Assertion Constraints vorkommen und verwendet werden. Im Beispiel wird eine sich dadurch ergebende bestimmte Reihenfolge oder ein Ablauf bestimmt, in welcher der Wissensgraph 200 erweitert wird. Bezogen auf das Frontend bedeutet dies, dass eine bestimmte Sequenz von Nutzereingaben angefordert wird. Bezogen auf die Schnittstelle 104 bedeutet dies, dass eine bestimmte Sequenz von Eingaben von der Maschine angefordert wird.

Zusätzlich zur Vermeidung von inkonsistenten Wissensgraphen kann ein Property Assertion Constraint oder können mehrere Property Assertion Constraints auch zur Validierung von Wissensgraphen verwendet werden. Dies ist besonders relevant für Fälle, in denen der Wissensgraph in anderer als der oben beschriebenen Weise erstellt oder erweitert wurde. Dies ist besonders relevant für Fälle, in denen bestimmte Abhängigkeiten geändert wurden, die eine Invalidierung von Property Assertion Constraints bewirken können.

Das Verfahren sieht dabei beispielsweise vor dem Schritt 202 folgendes vor:
Für eine Instanz im Wissensgraph 200, iteriere über ihre klassenspezifisch definierten Relationen und Attribute, und prüfe, ob die referenzierten Instanzen oder Relationen oder die zugewiesenen Literale oder Attribute pro Relation oder Attribut nur zulässige Werte verwenden. Zulässige Werte werden im Beispiel, sofern ein Property Assertion Constraint existiert, mittels Property Assertion Constraint als gültig ermittelt.

Wenn ein anderer als ein gültiger Wert oder andere als die gültigen Werte verwendet werden, so handelt es sich um eine Inkonsistenz im Wissensgraph 200. Um die Inkonsistenz einem Nutzer in verständlicher Weise zu erklären, kann vorgesehen sein, dass eine vordefinierte Erläuterung ausgegeben wird. Im Beispiel wird die vorgegebene vordefinierte Erläuterung des Property Assertion Constraint ausgegeben, für das festgestellt wurde, dass ein anderer als ein gültiger Wert oder andere als die gültigen Werte verwendet wird. Die vordefinierte Erläuterung wird z.B. im Frontend angezeigt. Eine weitergehende Erklärungskomponente kann zusätzlich aktive Links anbieten, mit denen der Nutzer direkt zu den Stellen im Wissensgraph 200 navigieren und/oder springen kann, die die Inkonsistenz bedingen, z.B. erforderliche Abhängigkeiten und/oder Voraussetzungen an anderer Stelle im Wissensgraph 200.

Ein wesentlicher Vorteil des Verfahrens besteht darin, dass der Wissensgraph 200 nur um semantisch korrekte Fakten erweitert wird. Dies ist essentiell für alle Anwendungen, die das Wissen konsumieren und darauf ihre Aktionen, Entscheidungen und Handlungen basieren. Denn nur so können sie korrekt und fehlerfrei funktionieren.

Das beschriebene Verfahren übernimmt quasi die Rolle eines Experten, der den Wissensgraph, die Domäne und/oder vorliegenden Gesetzmäßigkeiten und/oder Constraints kennt. Das Verfahren schlägt automatisch nur zulässige Instanzen und Literale vor, aus denen Mensch oder Maschine wählen darf oder kann. An die Stelle einer Erweiterung des Graph um neue Property Value Assertion und deren anschließende Validierung, die diese Fakten erst im Nachhinein als semantisch falsch detektieren können, oder des menschlichen Experten tritt eine informierte, fundierte, automatische Vorab-Ermittlung geeigneter Werte und somit valider Erweiterungen des Wissensgraphen, unter Berücksichtigung der geltenden Gesetzmäßigkeiten und/oder Constraints.

Im Folgenden werden Anwendungsbeispiele insbesondere Produkte beschrieben. Darüber hinaus sind viele weitere Anwendungen möglich. Das Verfahren ist unabhängig von Anwendung und Domäne einsetzbar.

Ein Produkt ist beispielsweise ein Gerät. Ein System kann mehrere Produkte umfassen.

Eine Anwendung ist es, eine Konfiguration neuer Produkte, ein Aufbau interoperabler Systeme, und eine Definition von Parametrierungsmöglichkeiten von Geräten und Systemen maßgeblich zu unterstützen. Die Unterstützung kann sowohl ein Mensch als auch eine Maschine, beispielsweise deren Software-Algorithmus, erfahren. Für einen Menschen kann die Unterstützung z.B. über das Frontend, insbesondere ein geeignetes User Interface erfolgen. Es kann vorgesehen sein, dass über das User Interface neue Produkte definiert werden, z.B. in einem Produktportal. Es kann vorgesehen sein, dass über das User Interface neue Systeme erzeugt werden, z.B. in einem Systemkonfigurator. Es kann vorgesehen sein, dass über das User Interface Parametrierungen von Geräten editiert werden, z.B. für einen Geräte-Konfigurator oder Kommissionierungstool.

Die Property Assertion Constraints können hier maßgeblich dabei helfen, stets nur die zulässigen Bestandteile auszuwählen. Eine Maschine, insbesondere deren Software-Algorithmus, kann die Property Assertion Constraints über die Schnittstelle 104 nutzen, die die zulässigen Instanzen bzw. Literale für eine gegebene Instanz und Relation bzw. Attribut ermitteln, und damit automatisch Aufgaben wie eine Konfiguration neuer Produkte, eine Erzeugung interoperabler Systeme, eine Parametrierung von Geräten ausführen.

Es kann vorgesehen sein, dass Property Assertion Constraints für eine Konfiguration neuer Produkte eingesetzt werden. Mittels eines Property Assertion Constraint werden in diesem Beispiel Bedingungen für die Konfiguration eines Produktes aus verschiedenen Bestandteilen spezifiziert. Bestandteile sind beispielsweise Bestandteile von Geräten eines Residential Heating Systems, insbesondere dessen Hardware, Firmware und/oder Software. Ein Property Assertion Constraint definiert beispielsweise, dass nur für einander entwickelte Komponenten, in jeweils kompatiblen Versionen, ausgewählt und zu einem neuen Produkt kombiniert werden können. Dies ermöglicht es, ein Design des neuen Produktes mit korrekter Funktionsweise des neuen Produktes automatisiert durch eine Maschine oder durch einen Nicht-Experten durchzuführen, oder einen Experten maßgeblich dabei zu unterstützen. Dies spart Zeit und Aufwand und sichert oder verbessert die Konsistenz und Qualität der bereitgestellten Daten.

Es kann vorgesehen sein, dass Property Assertion Constraints für eine Komposition interoperabler Systeme eingesetzt werden. Interoperable Systeme sind z.B. Residential Heating Systems. Mittels Property Assertion Constraints werden in diesem Beispiel Kompatibilitätskriterien für Teile eines interoperablen Systems spezifiziert. Beispielsweise werden Kriterien definiert, die schrittweise stets nur solche Geräte zu einem wachsenden System vorschlagen, die zu allen anderen bereits ausgewählten Geräten paarweise kompatibel sind. Dies ermöglicht eine einfache, computergestützte Erstellung von Systemen, für die sichergestellt ist, dass sie nach ihrer Installation, z.B. in einem Gebäude, einer Fabrik oder im Internet of Things, IoT, d.h. einer Verteilten Kommunikations-Infrastruktur für Geräte, fehlerfrei funktionieren und alle Geräte zueinander interoperabel sind.

Ein beispielhaftes Property Assertion Constraint kann z.B. spezifizieren, dass Produkte innerhalb des Systems vom selben Hersteller oder der gleichen Marke sein müssen. Ein beispielhaftes Property Assertion Constraint kann z.B. spezifizieren, dass die Produkte innerhalb des Systems für die gleichen Zielmärkte freigegeben worden sind. Ein beispielhaftes Property Assertion Constraint kann z.B. spezifizieren, dass die Produkte innerhalb des Systems Kommunikationstoken exklusiv, d.h. nicht überlappend, verwenden. Ein beispielhaftes Property Assertion Constraint kann z.B. spezifizieren, dass die Produkte innerhalb des Systems paarweise Geräte-Kommunikationspaare innerhalb des Systems bilden, die Kriterien einer Interoperabilität erfüllen müssen. Kriterien der Interoperabilität sind z.B. technische, syntaktische, semantische, konzeptionelle Interoperabilität.

Weitergehende komplexe Bedingungen sind innerhalb des Property Assertion Constraints oder in separaten Property Assertion Constraints oder Regeln für diese spezifizierbar.

Es kann vorgesehen sein, dass Property Assertion Constraints mit Reasoning kombiniert werden, z.B. Regeln, aber auch OWL reasoning. Reasoning bezieht sich im Beispiel auf Beschreibungslogiken. Dazu werden Property Assertion Constraints auf einen durch einen Reasoner erweiterten, d.h. angereicherten, Wissensgraphen 200 angewendet. Dieser erweiterte Wissensgraph 200 erhält im Beispiel logische Konsequenzen und Property Assertion Constraints können diese verwenden. Damit lassen sich manche Property Assertion Constraints vereinfachen. Andererseits können auch erweiterte Use Cases realisiert werden, die ansonsten nicht oder nur sehr kompliziert formalisiert werden können.

Es kann vorgesehen sein, Property Assertion Constraints für eine Parametrierung von Produkten oder Systemen einzusetzen.

Es kann vorgesehen sein, dass Property Assertion Constraints für eine Parametrierung von Produkten oder Systemen eingesetzt werden. Eine Parametrierung erfolgt beispielsweise durch z.B. hardwareseitige Parameter, insbesondere Jumper oder Drehschalter. Eine Parametrierung erfolgt beispielsweise durch softwareseitige Parameter, insbesondere Software-Parameter, Einstellung per Menü in einem Geräte-Display und/oder Firmware-Upload. Es kann vorgesehen sein, dass die Parametrierung derart ausgebildet ist, dass eine Funktionalität und/oder ein Verhalten eines Produkts und/oder eines Systems, das mehrere Produkte umfasst, als Ganzes verändert wird.

Es kann vorgesehen sein, dass Property Assertion Constraints bei einer Definition möglicher Parametrierungen von Produkten oder Systemen eingesetzt werden. Beispielsweise sind Property Assertion Constraint vorgesehen, die sicherstellen, dass nur Kommunikationstoken oder Funktionen aktiv sein können, die von den Geräten oder dem System als Ganzes überhaupt hard- und softwareseitig unterstützt werden.

Beispielsweise sind Property Assertion Constraints vorgesehen, die Abhängigkeiten und Kausalitäten zwischen den verschiedenen Parametern und ihren Werten spezifizieren. Beispielsweise sind Property Assertion Constraints vorgesehen, die insbesondere in Abhängigkeit bereits gewählter ParameterWerte vorgeben, wie weitere Parameter genutzt und gesetzt werden können, d.h. welche Werte für diese Parameter zulässig sind. Damit wird ein Vorgang der Parametrierung von Produkten oder Systemen unterstützt. Damit wird eine Kommissionierung von Geräten und Systemen unterstützt. Damit werden konsistente, gültige Parametrierungen erzielt, z.B. im Kontext eines Kommissionierungstools.

## Patentansprüche

1. Computerimplementiertes Verfahren zur Erweiterung eines Graphen, insbesondere eines Wissensgraphen (200), **dadurch gekennzeichnet, dass** das Verfahren umfasst:
Vorgeben (202) einer Eingangsgröße, die eine zu erweiternde Instanz und eine der zu erweiternden Instanz zugeordnete Relation und/oder ein der zu erweiternden Instanz zugehöriges Attribut des Graphen (200) umfasst,
Bestimmen (204) einer der Eingangsgröße zugeordneten ersten Eigenschaftsbehauptungsbeschränkung,
Bestimmen (208, 212) eines Abfrage-Fragments für die erste Eigenschaftsbehauptungsbeschränkung,
Bestimmen (216) einer Abfrage, die eine vorgegebene Kern-Abfrage und das Abfrage-Fragment umfasst,
Ausführen (218) der Abfrage auf dem Graphen (200), wobei ein erstes Ergebnis bestimmt wird, das entweder wenigstens eine zulässige Instanz und/oder wenigstens ein zulässiges Literal für die Erweiterung des Graphen (200) umfasst oder keine Instanz und kein Literal.

2. Verfahren nach Anspruch 1, **dadurch gekennzeichnet, dass** das erste Ergebnis einem Nutzer angezeigt oder an eine Maschine ausgegeben wird (220).

3. Verfahren nach Anspruch 2, **dadurch gekennzeichnet, dass** eine zweite Eigenschaftsbehauptungsbeschränkung bestimmt wird, wobei für die zweite Eigenschaftsbehauptungsbeschränkung ein zweites Ergebnis bestimmt wird, das entweder wenigstens eine zulässige Instanz und/oder wenigstens ein zulässiges Literal für die Erweiterung des Graphen (200) umfasst oder keine Instanz und kein Literal, wobei abhängig vom ersten Ergebnis und vom zweiten Ergebnis eine Sequenz von Eingaben des Nutzers oder Eingaben von der Maschine angefordert wird, und der Graph (200) abhängig von der Sequenz erweitert wird, wobei die Sequenz eine Reihenfolge für Abfragen der Eingaben festlegt, in der eine erste Abfrage gemäß des ersten Ergebnisses vor einer zweiten Abfrage gemäß des zweiten Ergebnisses erfolgt, wobei das zweite Ergebnis oder die zweite Abfrage abhängig von einer Eingabe in Erwiderung der ersten Abfrage bestimmt wird.

4. Verfahren nach einem der Ansprüche 1 bis 3, **dadurch gekennzeichnet, dass** eine Auswahl wenigstens einer zulässigen Instanz für die Erweiterung des Graphen (200) erkannt wird, und der Graph (200) um eine vorgegebene Relation der zu erweiternden Instanz zu dieser Instanz erweitert wird und/oder eine Auswahl wenigstens eines zulässigen Literals für die Erweiterung des Graphen (200) erkannt wird, und der Graph (200) um ein Attribut für die zu erweiternde Instanz erweitert wird.

5. Verfahren nach einem der vorherigen Ansprüche, **dadurch gekennzeichnet, dass** das Bestimmen (204) der ersten Eigenschaftsbehauptungsbeschränkung umfasst:
Bestimmen (204) der Eigenschaftsbehauptungsbeschränkung, die der zu erweiternden Instanz zugeordnet ist, oder die einer Klasse zugeordnet ist, der die zu erweiternde Instanz zugeordnet ist.

6. Verfahren nach einem der Ansprüche 1 bis 4, **dadurch gekennzeichnet, dass** die zu erweiternde Instanz einer ersten Klasse zugeordnet ist, wobei das Bestimmen (204) der Eigenschaftsbehauptungsbeschränkung umfasst:
Bestimmen (204) der Eigenschaftsbehauptungsbeschränkung die einer zweiten Klasse zugeordnet ist, die der ersten Klasse in einer Klassenhierarchie am nächsten ist.

7. Verfahren nach einem der Ansprüche 5 oder 6, **dadurch gekennzeichnet, dass** das Bestimmen (204) der Eigenschaftsbehauptungsbeschränkung ein Auffinden eines Constraints des Graphen (200) umfasst, das für die Instanz gilt.

8. Verfahren nach einem der vorherigen Ansprüche, **dadurch gekennzeichnet, dass** wenn erkannt wird, dass keine relevante Eigenschaftsbehauptungsbeschränkung existiert, die Abfrage ohne ein Abfrage-Fragment bestimmt wird.

9. Verfahren nach einem der vorherigen Ansprüche, **dadurch gekennzeichnet, dass** die Eingangsgröße aus einer Graphdatenbank, in welcher der Graph (200) gespeichert ist, insbesondere aus einem Speicher für Tripel des Wissensgraphen, gelesen wird, wobei die Abfrage auf der Graphdatenbank ausgeführt wird.

10. Vorrichtung (100) zur Erweiterung eines Graphen, insbesondere eines Wissensgraphen (200), **dadurch gekennzeichnet, dass** die Vorrichtung (100) ausgebildet ist, das Verfahren nach einem der Ansprüche 1 bis 9 auszuführen.

11. Computerprogramm, **dadurch gekennzeichnet, dass** das Computerprogramm computerlesbare Instruktionen umfasst, bei deren Ausführung durch einen Computer ein Verfahren nach einem der Ansprüche 1 bis 9 abläuft.
